# FASCICULE DE BREVET EUROPEEN

(11) **EP 0 534 835 B1**
(45) Date de publication et mention de la délivrance du brevet: **27.12.1996**
(21) Numéro de dépôt: 92402595.0
(22) Date de dépôt: 22.09.1992
(51) Int. Cl.: F16J 15/32, F16J 15/54, F16C 27/06

(54) **Joint d'étanchéité perfectionné, notamment pour arbre de pompe**
Abdichtung, insbesondere für Pumpenwellen
Seal, in particular for pump shafts

(30) Priorité: 25.09.1991 FR 9111796
(43) Date de publication de la demande: 31.03.1993
(73) Titulaire: SOCIETE ELECTROMECANIQUE DU NIVERNAIS - SELNI, F-58000 Nevers (FR)
(72) Inventeur: Bourdelain, Laurent, F-92045 Paris la Defense (FR); Cousin, Joel, F-92045 Paris la Defense (FR)
(74) Mandataire: Benoit, Monique

(56) Documents cités:
- DE-A- 3 835 511
- DE-B- 1 273 938
- FR-E- 71 821
- GB-A- 1 460 367
- US-A- 3 073 654
- IBM TECHNICAL DISCLOSURE BULLETIN vol. 13, no. 1, 1 Juin 1970, NEW YORK page 199 R.J. CHARLTON 'Floating Bearing Race Retainer'

## Description

La présente invention concerne un dispositif d'étanchéité comportant un joint multifonctions, monobloc ou en deux parties, pour des cloisons séparant deux enceintes et traversées par un arbre et plus particulièrement un tel joint utilisé dans une pompe, notamment une pompe équipée d'un moteur monophasé de type synchrone.

Dans un appareil électro-ménager, une pompe à moteur électrique monophasé de type synchrone sert souvent de pompe de circulation de liquide, en particulier de vidange. Dans ce cas, elle comprend en général un compartiment pompe, dans lequel l'eau circule, et un moteur électrique d'entraînement. Ce moteur peut être un moteur synchrone, asynchrone, universel ou un moteur électrique d'un autre type. Il entraîne la roue à aubes du compartiment dans lequel l'eau circule par l'intermédiaire d'un arbre d'entraînement et crée une zone sensible aux interfaces "cloison/arbre" par laquelle des impuretés peuvent s'infiltrer du compartiment pompe vers le compartiment moteur. Ces éléments viennent s'agglomérer entre le rotor et une paroi voisine du compartiment moteur et créent un frottement préjudiciable au bon fonctionnement de l'ensemble.

L'utilisation de joints d'étanchéité entre le compartiment pompe et le compartiment moteur permet en partie de résoudre le problème, mais le frottement de l'arbre du rotor sur le joint use celui-ci qui se détériore et ne remplit plus son rôle de joint étanche. Certains fabricants, pour éviter des usures prématurées de l'ensemble "arbre/palier" utilisent un système de joint torique qui laisse au palier de la pompe un certain degré de liberté ; en effet, cela permet d'aligner l'arbre sur les différentes pièces de la pompe et d'éviter les frottements dus à un mauvais alignement de l'arbre. On a ainsi affaire à un dispositif d'étanchéité en deux parties qui est onéreux et présente des difficultés de montage.

La présente invention propose donc d'utiliser une pièce unique de forme telle qu'elle assure un certain degré de liberté au palier et une double étanchéité de l'ensemble "arbre/palier".

Plus précisément, l'invention a pour objet un dispositif d'étanchéité tel que défini par la revendication 1.

Un autre avantage est que cette étanchéité est maintenue même en cas d'inclinaison de la pièce support palier au montage, ou en cas d'inclinaison de l'arbre pendant le fonctionnement, le joint étant disposé entre le support palier et le palier, qui est toujours aligné sur l'arbre, il reste toujours concentrique autour de l'arbre et en contact avec celui-ci.

D'autre part, la surface de contact entre le joint et le palier étant importante, le joint est parfaitement solidaire du palier.

Un autre avantage de cette invention provient du fait que la partie du joint assurant l'étanchéité de l'arbre par rapport au compartiment pompe ,n'est en contact avec l'arbre que d'un seul côté, l'autre côté étant libre ; cette partie du joint s'use moins vite même en cas d'inclinaison de l'arbre par rapport à son axe.

L'invention sera mieux comprise et d'autres avantages apparaîtront à la lecture de la description d'un exemple de réalisation qui va suivre, accompagné de figures annexées.

La figure 1 représente une vue en coupe selon le plan passant par l'axe d'une pompe réalisée selon un premier mode de réalisation de l'invention.

La figure 2 représente une vue en coupe selon le plan passant par l'axe d'une pompe, réalisée selon un second mode de réalisation de l'invention.

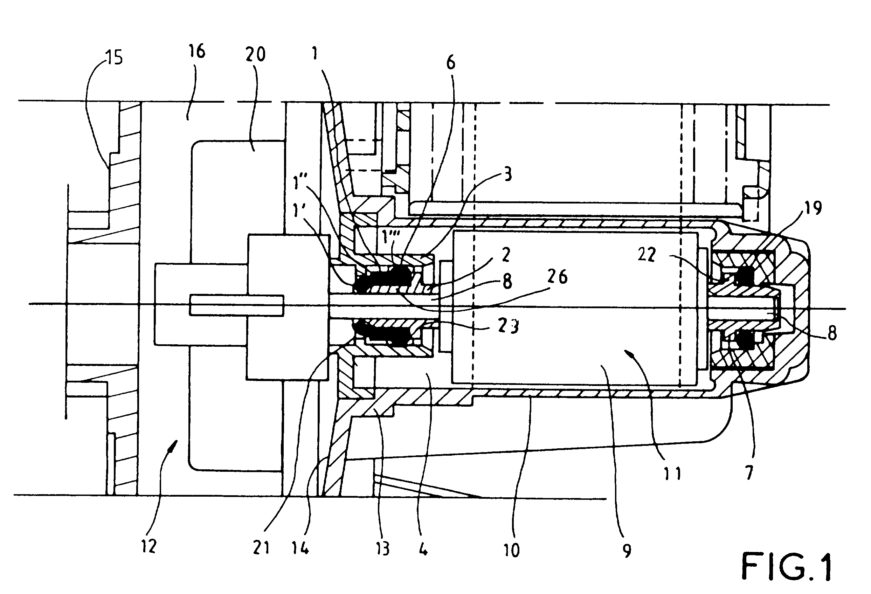

Dans l'exemple de réalisation illustré par la figure 1, une pompe à laquelle s'applique l'invention comprend : un moteur 11, une pompe 12 et un boîtier commun 13 formé de deux éléments : un corps creux formant le compartiment moteur 10 et un compartiment pompe 16 formé par une platine de pompe 14 et un couvercle 15.

Le moteur électrique d'entraînement 11 peut être un moteur monophasé de type synchrone pourvu d'un rotor 9 logé à l'intérieur du compartiment moteur 10, mais tout autre type de moteur peut être utilisé. L'arbre 8 du rotor 9 est maintenu libre en rotation par deux support-palier, un support palier arrière constitué par le fond du compartiment moteur et un support palier avant 3 jouant le rôle de cloison de séparation adjacent à la pompe, servant également de cloison mitoyenne de séparation étanche entre le compartiment moteur 10 et le compartiment pompe 16. Le support-palier arrière est constitué par la partie arrière du compartiment moteur 10 et sur lui vient se placer le palier 7 et le joint torique 19 afin de donner un certain degré de liberté à l'arbre. Ce palier 7 immobile, est en forme de cylindre creux dont l'un des bouts est biseauté et dans lequel passe l'arbre du rotor, et il est muni d'une collerette 22 contre laquelle vient buter le joint torique 19, celui-ci étant ainsi disposé entre un épaulement du support palier arrière et la collerette 22. Le palier 7 possède une collerette unique. Cela permet un moulage du palier plus précis, le moule pouvant n'être constitué que de deux parties, et un montage aisé du joint 19 sur le palier 7.

Entre le rotor 9 et l'ouverture circulaire 21 dans le support palier avant 3 pour laisser passer l'arbre 8, le palier 2 guide l'arbre 8 tout en conservant une certaine mobilité puisqu'il n'est fixé à aucune pièce du corps de la pompe. En effet, ce palier 2 immobile est en forme de cylindre creux, dont l'une de ses extrémités est biseautée et est munie d'une collerette 23 sur laquelle vient buter le joint 1. Il est maintenu par l'arbre qu'il entoure et le contact arbre 8/palier 2 est assuré par l'utilisation d'un lubrifiant, mais l'utilisation de matériaux coulissant bien l'un par rapport à l'autre est possible sans sortir du cadre de l'invention. Le palier 2 est d'autre part maintenu au support palier avant 3 par l'intermédiaire du joint 1. Ce support palier 3 est emmanché en force dans l'ouverture du compartiment moteur.

Le dispositif d'étanchéité selon le premier mode de réalisation de l'invention comporte le joint 1 en forme de couronne circulaire et constitué de trois parties. La première partie assurant l'étanchéité entre l'arbre 8 et la surface interne du palier 2 est une lèvre 1' dont l'extrémité enserre l'arbre 8 et se trouve entre cet arbre, le support palier 3 et le palier 2. Cette lèvre déborde à l'extérieur du palier sur l'arbre. Elle est reliée de façon souple au reste du joint 1.

La seconde partie ou partie centrale présente un épaulement 1" à son raccordement avec la première partie 1' de manière à pouvoir, lors du montage, être emmanchée sur le palier 2 par l'appui d'un outil spécifique. La surface extérieure du gradin 1" ainsi que celle de la lèvre l'est libre mais la surface interne du support palier 3 en regard de cette partie du joint peut épouser la forme de cette dernière et être en contact avec elle, ceci pour augmenter l'efficacité de l'étanchéité.

De plus, la surface interne 26 de cette seconde partie du joint 1 en contact avec la partie cylindrique du palier 2 assure le maintien parfait du joint 1 sur le palier 2, maintien fondamental pour que la lèvre 1' reste en contact avec l'arbre 8 sur lequel s'aligne parfaitement le palier 2.

La troisième partie 1"' a une forme torique et assure d'une part l'étanchéité entre la surface extérieure du palier 2 et le support-palier 3 et d'autre part joue un rôle d'amortisseur, comme le joint torique 19 du palier arrière, des mouvements de l'arbre autour de son axe. L'étanchéité est améliorée par la forme donnée à la zone de contact support-palier/partie 1"' du joint qui a la forme d'une portée sphérique 6 dont le rayon sphérique, par rapport à l'axe de l'arbre 8 est inférieur au rayon de la surface exterieure de la partie torique 1"'. Cela a pour conséquence que la partie torique 1"' est écrasée mais peut pivoter librement dans le logement sphérique 6 sans qu'il y ait un écrasement supplémentaire de matière ; ceci évite un couple important qui s'opposerait à l'alignement du palier sur l'arbre et générerait une usure supplémentaire de l'ensemble arbre/palier.

Ces trois parties ne forment qu'une seule pièce 1. Ce joint monobloc 1 peut être en élastomère ou tout autre matériau utilisé pour la fabrication de joint. Sa grande surface de contact avec le palier et le support palier entre lesquels il se frotte diminue les vibrations transmises par l'arbre en rotation au reste de la pompe en les amortissant. Ceci diminue le bruit. D'autre part, le joint 1 et le palier 2 peuvent être faits en une seule pièce grâce à une liaison intime entre eux, réalisée par exemple, par un moulage en bimatière

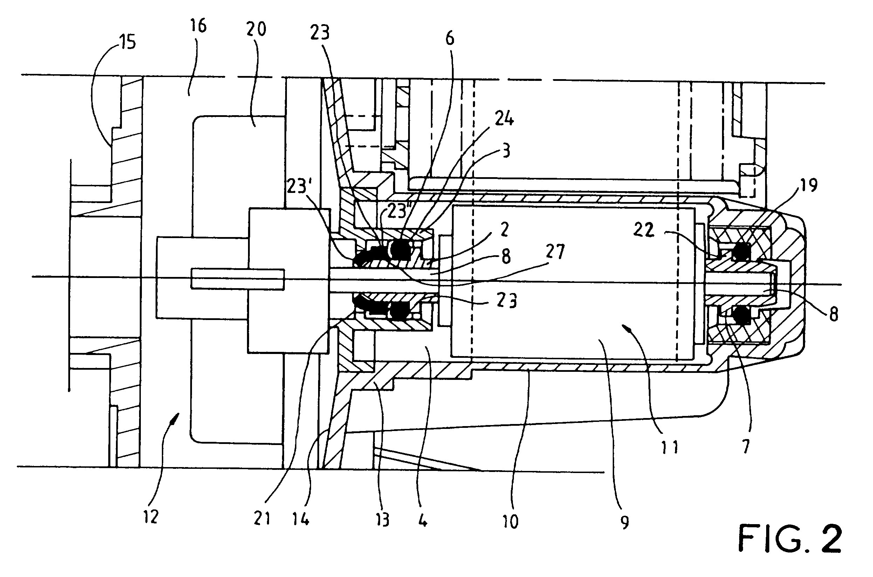

Dans le second mode de réalisation illustré par la figure 2, la structure de la pompe à laquelle s'applique l'invention est identique à celle de la figure 1 excepté le joint assumant la double fonction d'étanchéité et de souplesse de l'ensemble arbre/palier par rapport à la pompe, qui est constitué de deux parties distinctes contrairement au joint monobloc 1 de la figure 1. Les éléments identiques dans les deux figures ont donc la même référence. La description concernant ces éléments faite précédemment reste valable pour ce second mode de réalisation de l'invention.

Le dispositif d'étanchéité selond le second mode de réalisation comporte deux joints.

Le premier joint 23 comporte deux parties solidaires. La première partie est en forme de lèvre 23' et assure l'étanchéité de l'arbre 8 par rapport au compartiment pompe 16 et est prolongée par la seconde partie munie d'un épaulement 23" de manière à pouvoir, lors du montage, être emmanché sur le palier 2 par l'appui d'un outil spécifique. Ces deux parties 23' et 23" ne forment qu'un seul joint enserrant le palier et débordant sur l'arbre au niveau de la lèvre 23'. La grande surface de contact entre ce joint 23 et la surface externe cylindrique du palier 2 assure le maintien du joint 23. Seule sa surface interieure est en contact avec cette surface externe du palier 2, la surface extérieure est libre mais la surface interieure du support palier 3 en regard de cette partie du joint 23 peut épouser la forme de cette dernière et être en contact avec elle, ceci pour augmenter l'efficacité de l'étanchéité.

Le second joint 24 est torique et assure d'une part l'étanchéité entre la surface extérieure du palier 2 et le support palier 3 et, d'autre part, joue un rôle d'amortisseur, comme le joint torique 19 du palier arrière 7, des mouvements de l'arbre autour de son axe. L'étanchéité est améliorée par la forme donnée à la zone de contact support palier 3/joint 24 qui a la forme d'une portée sphérique 6 dont le rayon, par rapport à l'arbre 8, est inférieur au rayon de la surface exterieure du joint 24.

Cela a pour conséquence que ce joint est écrasé mais peut pivoter librement dans le logement sphérique 6 sans qu'il y ait un écrasement supplémentaire de matière.

D'autre part, les joints 23 et 24 et le palier 2 peuvent être faits en une seule pièce grâce à une laison intime entre eux réalisée, par exemple, comme un moulage en bi-matière.

Un avantage supplémentaire de l'invention est la facilité de montage de l'ensemble de la pompe qui consiste en un embranchement simple du joint 1 sur le palier 2 et un montage vertical de la pompe.

La présenté invention s'applique à tout type de joint utilisé pour l'étanchéité d'une cloison traversée par un arbre, et plus particulièrement à tout type de pompe utilisée dans l'industrie.

## Revendications

1. Dispositif d'étanchéité entre une première enceinte (16) dans laquelle se trouve un liquide et une seconde enceinte (10) avec un arbre (8) qui s'étend de la seconde à la première enceinte, cet arbre étant supporté par au moins un palier (2, 7), le dispositif comportant au moins un joint torique ;
le dispositif étant caractérisé par le fait qu'il comporte un joint monobloc formé de trois parties, la première partie, en forme de lèvre (1'), assurant l'étanchéité entre l'arbre (8) et la surface intérieure du palier (2), la seconde partie enserrant dans sa surface intérieure (26) la partie cylindrique du palier (2), assurant ainsi le maintien du joint (1) sur le palier (2), et reliant la première partie du joint (1) à la troisième partie, cette dernière étant en forme de joint torique (1"') et assurant l'étanchéité entre la surface extérieure du palier (2) et la cloison de séparation (3) ainsi qu'un certain degré de liberté à l'ensemble arbre (8)-palier (2).

2. Dispositif d'étanchéité selon la revendication 1, caractérisé par le fait que la surface extérieure de la seconde partie du joint (1) a la forme d'un épaulement (1").

3. Dispositif d'étanchéité selon l'une des revendications précédentes, caractérisé par le fait que la surface extérieure de la lèvre (1') et de la seconde partie du joint (1) est libre.

4. Dispositif d'étanchéité selon l'une des revendications précédentes, caractérisé par le fait qu'il comporte un support palier (3) servant de cloison de séparation, qui comporte une zone de contact (6) avec la partie torique (1"') du joint (1), à portée sphérique dont le rayon ramené à l'axe de l'arbre (8) est inférieur au rayon de la surface extérieure de la partie torique (1"') du joint (1).

5. Dispositif d'étanchéité selon l'une des revendications précédentes, caractérisé par le fait que le joint est réalisé en élastomère.

6. Dispositif d'étanchéité selon l'une des revendications précédentes, caractérisé par le fait qu'il comporte au moins un palier (7) en forme de cylindre creux dont l'une des extrémités est biseautée et comporte une collerette (22).

7. Dispositif d'étanchéité selon l'une des revendications précédentes, caractérisé par le fait que le joint (1) et le palier (2) sont faits d'une seule pièce grâce à une liaison intime.

8. Dispositif d'étanchéité selon la revendication 7, caractérisé par le fait que la liaison intime est un moulage en bimatière.

9. Pompe, caractérisée par le fait qu'elle est équipée d'un dispositif d'étanchéité tel que revendiqué dans l'une des revendications précédentes.

10. Pompe selon la revendication 9, caractérisée par le fait qu'elle comporte deux paliers (2, 7) enserrant l'arbre (8) de chaque côté du rotor (9), chacun d'eux possédant un certain degré de liberté et utilisant, pour cela, l'un,un dispositif d'étanchéité selon l'une quelconque des revendications 1 à 8, et l'autre, un joint torique (19).

## Patentansprüche

1. Dichtvorrichtung zwischen einem ersten Raum (16), in dem sich eine Flüssigkeit befindet, und einem zweiten Raum (10) für eine Welle (8), die sich vom zweiten zum ersten Raum erstreckt und von mindestens einem Lager (2, 7) getragen wird, wobei die Vorrichtung mindestens eine Ringdichtung aufweist,
dadurch gekennzeichnet, daß sie eine einstückige Dichtung aus drei Teilen enthält, wobei der erste Teil in Form einer Lippe (1') die Abdichtung zwischen der Welle (8) und der Innenfläche des Lagers (2) gewährleistet, der zweite Teil (1") mit seiner Innenfläche (26) den zylindrischen Bereich des Lagers (2) umschließt, wodurch er den Halt der Dichtung (1) auf dem Lager (2) gewährleistet und den ersten Teil (1') der Dichtung (1) mit dem dritten Teil (1"') verbindet, der die Form eines Torusrings hat und die Abdichtung zwischen der Außenfläche des Lagers (2) und der Trennwand (3) sowie ein bestimmtes Spiel für die Einheit aus Welle (8) und Lager (2) gewährleistet.

2. Dichtvorrichtung nach Anspruch 1, dadurch gekennzeichnet, daß die Außenfläche des zweiten Teils (1") der Dichtung (1) die Form einer Schulter hat.

3. Dichtvorrichtung nach einem der vorhergehenden Ansprüche, dadurch gekennzeichnet, daß die Außenfläche der Lippe (1') und des zweiten Teils (1") der Dichtung (1) frei ist.

4. Dichtvorrichtung nach einem der vorhergehenden Ansprüche, dadurch gekennzeichnet, daß sie einen Lagerträger (3) aufweist, der als Trennwand dient und eine Kontaktzone (6) mit dem Ringteil (1"') der Dichtung (1) mit kugeliger Auflagefläche besitzt, deren Radius in Bezug auf die Achse der Welle (8) kleiner als der Radius der Außenfläche des Ringteils (1"') der Dichtung (1) ist.

5. Dichtvorrichtung nach einem der vorhergehenden Ansprüche, dadurch gekennzeichnet, daß die Dichtung aus Elastomer besteht.

6. Dichtvorrichtung nach einem der vorhergehenden Ansprüche, dadurch gekennzeichnet, daß sie mindestens ein Lager (7) in Form eines Hohlzylinders aufweist, dessen eines Ende abgeschrägt ist und einen Kragen (22) aufweist.

7. Dichtvorrichtung nach einem der vorhergehenden Ansprüche, dadurch gekennzeichnet, daß die Dichtung (1) und das Lager (2) aufgrund einer engen Verbindung aus einem Stück bestehen.

8. Dichtvorrichtung nach Anspruch 7, dadurch gekennzeichnet, daß die enge Verbindung ein Guß aus zweierlei Material ist.

9. Pumpe, dadurch gekennzeichnet, daß sie eine Dichtvorrichtung nach einem der vorhergehenden Ansprüche aufweist.

10. Pumpe nach Anspruch 9, dadurch gekennzeichnet, daß sie zwei Lager (2, 7) aufweist, die die Welle (8) auf jeder Seite des Rotors (9) umschließen und die je ein gewisses Spiel aufweisen, wobei das eine Lager eine Dichtvorrichtung gemäß einem beliebigen der Ansprüche 1 bis 8 und das andere Lager eine Ringdichtung (19) verwendet.

## Claims

1. Device providing sealing between a first chamber (16) in which there is a liquid and a second chamber (10) with a shaft (8) which runs from the second to the first chamber, this shaft being supported by at least one bearing (2, 7), the device including at least one O-ring seal; the device being characterized in that it includes a single-piece seal formed of three parts, the first part, in the form of a lip (1') providing sealing between the shaft (8) and the interior surface of the bearing (2), the second part closely surrounding the cylindrical part of the bearing (2) in its interior surface (26), thus holding the seal (1) on the bearing (2), and connecting the first part of the seal (1) to the third part, the latter being in the form of an O-ring seal (1"') and providing sealing between the exterior surface of the bearing (2) and the separating partition (3) as well as a certain degree of freedom for the shaft (8)/bearing (2) assembly.

2. Sealing device according to Claim 1, characterized in that the exterior surface of the second part of the seal (1) has the form of a shoulder (1").

3. Sealing device according to one of the preceding claims, characterized in that the exterior surface of the lip (1') and of the second part of the seal (1) is free.

4. Sealing device according to one of the preceding claims, characterized in that it includes a bearing support (3) serving as a separating partition, which includes a region (6) of contact with the O-ring part (1''') of the seal (1), having a spherical bearing surface of which the radius taken to the axis of the shaft (8) is less than the radius of the exterior surface of the O-ring part (1''') of the seal (1).

5. Sealing device according to one of the preceding claims, characterized in that the seal is made of elastomer.

6. Sealing device according to one of the preceding claims, characterized in that it includes at least one bearing (7) in the form of a hollow cylinder, one of the ends of which is bevelled and has a flange (22).

7. Sealing device according to one of the preceding claims, characterized in that the seal (1) and the bearing (2) are made as a single piece by virtue of a close connection.

8. Sealing device according to Claim 7, characterized in that the close connection is a two-material moulding.

9. Pump, characterized in that it is equipped with a sealing device as claimed in one of the preceding claims.

10. Pump according to claim 9, characterized in that it includes two bearings (2, 7) closely surrounding the shaft (8) on each side of the rotor (9), each of these bearings having a certain degree of freedom and, for that purpose, one using a sealing device according to any one of Claims 1 to 8, and the other an O-ring seal (19).
